# EUROPÄISCHE PATENTANMELDUNG

(11) **EP 3 893 307 A1**
(43) Veröffentlichungstag der Anmeldung: **13.10.2021**
(21) Anmeldenummer: 21166742.3
(22) Anmeldetag: 01.04.2021
(51) Int. Cl.: H01M 10/04, H01M 10/058

(54) **VERFAHREN UND VORRICHTUNG ZUM BESTÜCKEN VON TRÄGERN MIT RUNDZELLEN**

(30) Priorität: 07.04.2020 AT 502952020
(71) Anmelder: Rosendahl Nextrom GmbH, 8212 Pischelsdorf am Kulm (AT)
(72) Erfinder: WUND, René, 8045 Graz (AT); SEMLER, Gerald Josef, 8230 Hartberg (AT); SCHIRNHOFER, Johannes, 8224 Kaindorf (AT); PROKOP, Rainer Richard, 8274 Buch - St. Magdalena (AT); ARZT, Christian, 8230 Hartberg-Umgebung (AT); ARTINGER, Manfred, 8212 Pischelsdorf (AT)
(74) Vertreter: Beer & Partner Patentanwälte KG

(57) **Zusammenfassung**

Eine Vorrichtung (1) zum Bestücken von Trägern (4) mit Rundzellen, beispielsweise Lithium-Ionen-Rundzellen (5), besitzt ein Magazin (8) für Rundzellen (5), eine Vereinzelungsvorrichtung (9), eine Einrichtung (10) zum Schwenken von Rundzellen (5), eine Anordnung zum Einführen von Rundzellen (5) in einen Beladekanal (11) eines Bestückungskopfes (7) und ein Setzrohr (16) mit einer Anordnung zum Festhalten von Rundzellen (5). Mit der Vorrichtung (1) werden Rundzellen (5) aus dem Magazin (8) einzeln entnommen, dann verschwenkt, um sie mit der richtigen Polarität auszurichten, worauf die Rundzellen (5) mit der richtigen Polarität erfasst und in den Träger (4) für Rundzellen (5) abgesetzt werden.

## Beschreibung

Die Erfindung betrifft ein Verfahren und eine Vorrichtung zum Bestücken von Trägern mit Rundzellen mit den Merkmalen der unabhängigen auf das Verfahren und auf die Vorrichtung gerichteten Ansprüche.

Es ist bekannt, dass Akkumulatoren (Batterien) für Elektrofahrzeuge Rundzellen, z.B. zylindrische Lithium-Ionen-Zellen, enthalten. Die Rundzellen sind in Zellenträger ("Carrier"), die Fächer für jeweils eine Rundzelle aufweisen, eingesetzt. Dabei muss beim Einsetzen der Rundzellen darauf geachtet werden, dass die Rundzellen mit der richtigen Ausrichtung in dem Zellenträger sitzen, also die positiven und negativen Pole der Rundzellen richtig ausgerichtet sind, also mit der richtigen (vorgegebenen) Polarität eingesetzt sind.

In CN 104300162 A wird das Bestücken einer Batterie-Box mit Batterien (Rundzellen) beschrieben, Rundzellen werden in einer Box über einen Förderer (mit Förderband) angefördert. Aus der Box werden Rundzellen von einem Roboter entnommen und in einen Zwischenspeicher mit mehreren Batterieklemmen eingesetzt. Ein Roboter entnimmt Rundzellen aus dem Zwischenspeicher und setzt sie einzeln an jeweils eine von vier Klammern, die auf einem Drehteller stehend angeordnet sind, an. Ein dritter Roboter bringt an den Rundzellen Isolierpapier an. Mit Hilfe eines weiteren Roboters werden Rundzellen durch eine Koppbewegung in die gewünschte Polarität gebracht. Schließlich werden Rundzellen von einem Roboter einzeln in die Batterie-Box eingesetzt.

Der Erfindung liegt die Aufgabe zugrunde, das Verfahren und die Vorrichtung der eingangs genannten Art so weiterzubilden, dass ein sicheres Bestücken von Trägern für Rundzellen, die mit der richtigen Polarität ausgerichtet sind, möglich zu machen.

Gelöst wird diese Aufgabe einerseits mit einem Verfahren, das die Merkmale des unabhängigen, auf das Verfahren gerichteten Patentanspruches umfasst, und anderseits mit einer Vorrichtung, die die Merkmale des unabhängigen, auf die Vorrichtung gerichteten Patentanspruches aufweist.

Bevorzugte und vorteilhafte Weiterbildungen der Erfindung sind Gegenstand der Unteransprüche.

Die Erfindung macht es möglich, in einem Magazin weitgehend ungeordnet bevorratete Rundzellen so zu handhaben, dass die Rundzellen rasch und zuverlässig mit der richtigen Ausrichtung ihrer Pole, also mit der richtigen Polarität, in Träger ("Carrier") eingesetzt werden können.

In einer möglichen Durchführungsform des erfindungsgemäßen Verfahrens kann vorgesehen sein, dass die Vereinzelungsvorrichtung mit einem Drehstern arbeitet.

In einer möglichen Durchführungsform des erfindungsgemäßen Verfahrens kann vorgesehen sein, dass im Anschluss an die Vereinzelung von Rundzellen eine Prüfung der Polarität und gegebenenfalls der Funktion der Rundzellen mit Hilfe einer Anordnung ausgeführt wird.

In einer möglichen Durchführungsform des erfindungsgemäßen Verfahrens kann vorgesehen sein, dass das Schwenken von Rundzellen erfolgt, indem Rundzellen in einer schwenkbaren Wanne aufgenommen werden und die Wanne geschwenkt wird.

In einer möglichen Durchführungsform des erfindungsgemäßen Verfahrens kann vorgesehen sein, dass das Schwenken von Rundzellen erfolgt, indem diese an einem außermittig zur Länge der Rundzellen vorgesehenen Stift anliegen und schwenken, wenn sie sich an dem Stift vorbeibewegen.

In einer möglichen Ausführungsform der erfindungsgemäßen Vorrichtung kann vorgesehen sein, dass durch ein Magazin, eine Vereinzelungsvorrichtung, eine Einrichtung zum Schwenken von Rundzellen, eine Anordnung zum Einführen von Rundzellen in einen Beladekanal eines Bestückungskopfs und durch ein Setzrohr mit einer Anordnung zum Festhalten von Rundzellen.

Die Art der Rundzellen, die gemäß der Erfindung gehandhabt werden können und die Stromspeicher sind, ist beliebig. Insbesondere ist die Erfindung für Rundzellen, wie Lithium-Ionen-Zellen, mit zylindrischer Form geeignet.

Weitere Einzelheiten und Vorteile der Erfindung ergeben sich aus der nachstehenden Beschreibung eines Ausführungsbeispieles anhand der Zeichnungen. Es zeigt:
- Fig. 1: eine Vorrichtung zum Bestücken,
- Fig. 2: eine Einzelheit der Vorrichtung aus Fig. 1 im Bereich eines Bestückungskopfes,
- Fig. 3: den Bestückungskopf in vergrößertem Maßstab,
- Fig. 4: eine Einzelheit des Bestückungskopfes mit einer Übergabewanne,
- Fig. 5: die Einzelheit von Fig. 4 in anderer Ansicht,
- Fig. 6: den Bestückungskopf in anderer Ansicht,
- Fig. 7: teilweise im Schnitt den Bestückungskopf,
- Fig. 8: eine Einzelheit im Bereich des Bestückungskopfes und
- Fig. 9: die Einzelheit von Fig. 8 in einer anderen Stellung.

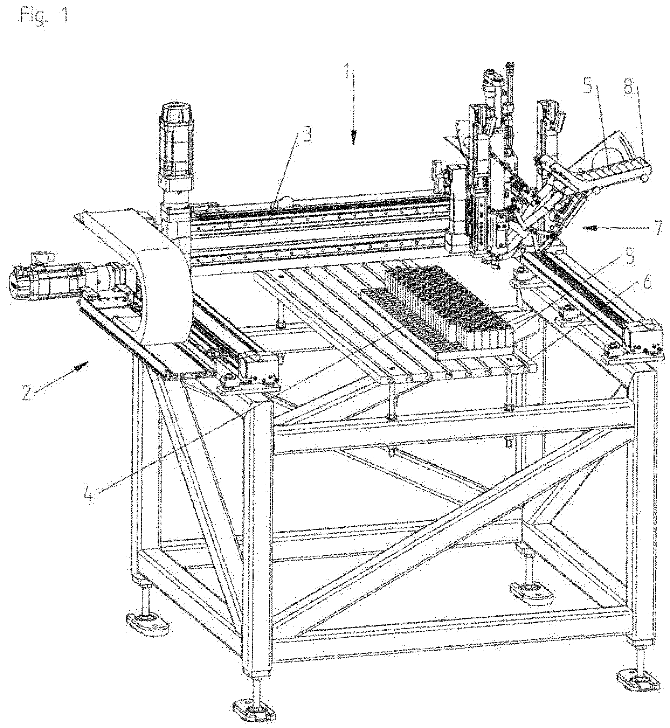

Fig. 1 zeigt eine Vorrichtung 1 zum Bestücken, die auf einem portalkranartigen Träger 2 angeordnet ist. Unterhalb des Balkens 3 des Trägers 2 ist ein Zellenträger 4 mit mehreren Aufnahmeräumen für Rundzellen 5 auf einem Tisch 6 angeordnet. An Stelle des portalkranartigen Trägers 2 kann ein mehrachsiger Roboter (nicht gezeigt) vorgesehen sein, der den Bestückungskopf 7 der Vorrichtung 1 in die jeweils richtige Position bewegt. Alternativ und/oder zusätzlich kann vorgesehen sein, dass der Tisch 6, auf welchem der Zellenträger 4 für Rundzellen 5 angeordnet ist, nach Art eines Kreuztisches horizontal verstellbar ist, oder dass ein Werkstücktransfersystem vorgesehen ist.

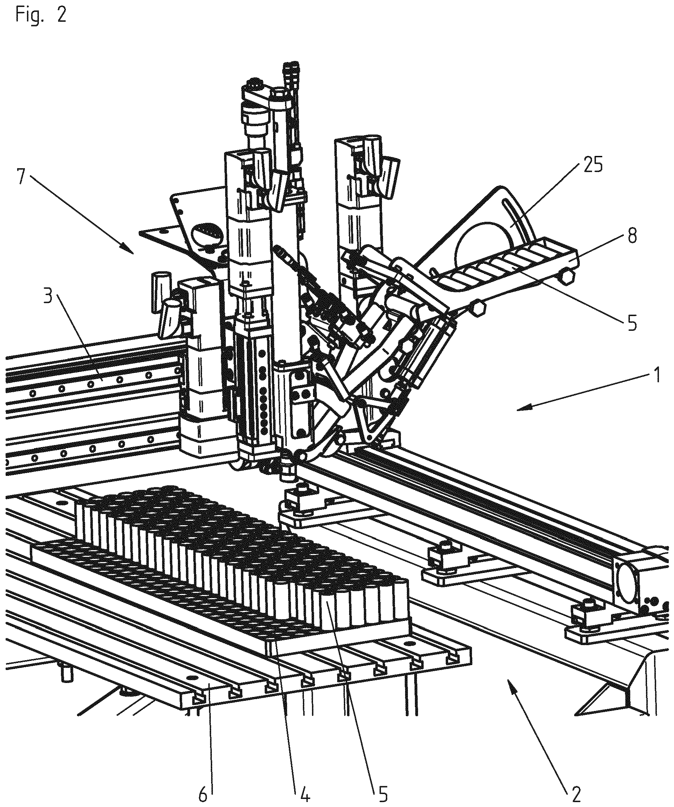

Fig. 2 zeigt in größeren Einzelheiten den Bestückungskopf 7 mit einem Magazin 8, enthaltend Rundzellen 5.

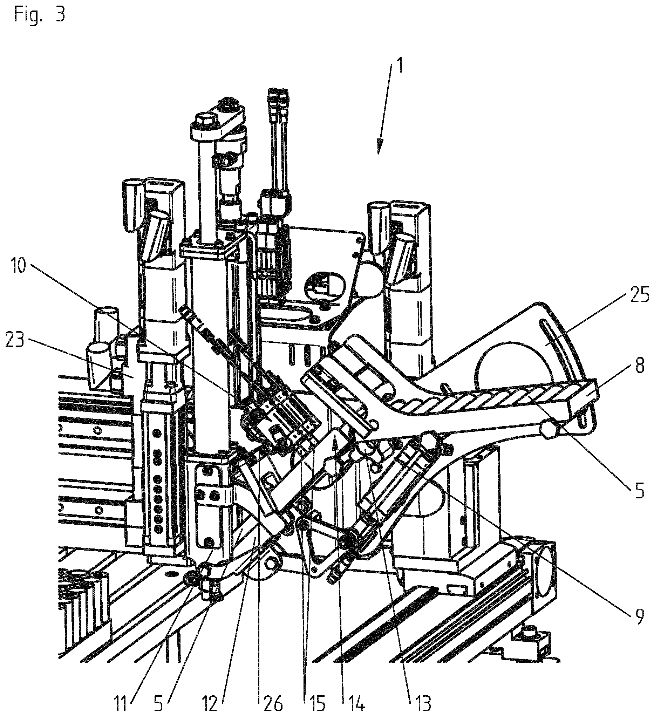

Fig. 3 zeigt eine Einzelheit des Bestückungskopfes 7 mit dem Magazin 8 und einer Vereinzelungseinrichtung 9, eine Einrichtung 10 zum Schwenken (Drehen) von Rundzellen 5 in die richtige Polarität sowie den Beladekanal 11, in welchen die Rundzellen 5, wenn sie in die richtige Polarität ausgerichtet worden sind, hineinbewegt werden.

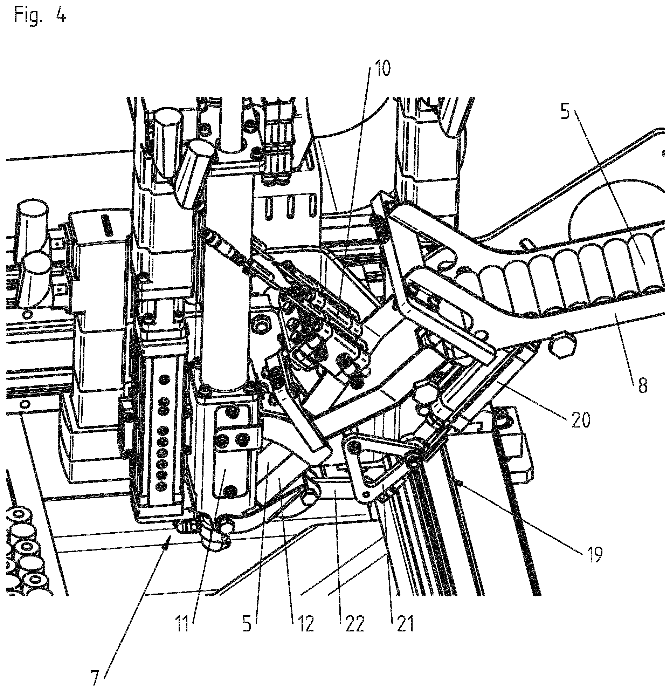

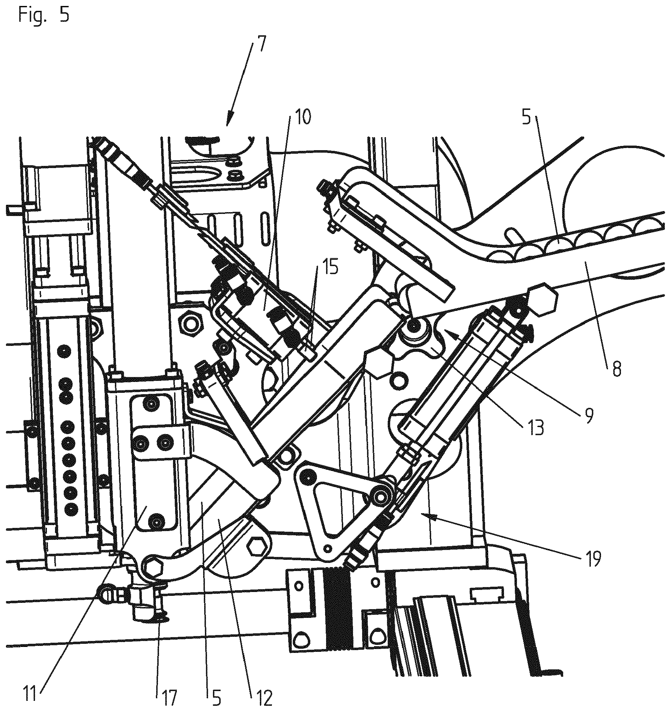

Fig. 4 und 5 zeigen in mehr Einzelheiten die Einrichtung 10 zum Schwenken der Rundzellen 5 in die richtige Polarität und eine Übergabeschale 12, mit der die in die richtige Polarität ausgerichteten Rundzellen 5 in den Beladekanal 11 des Bestückungskopfes 7 bewegt werden.

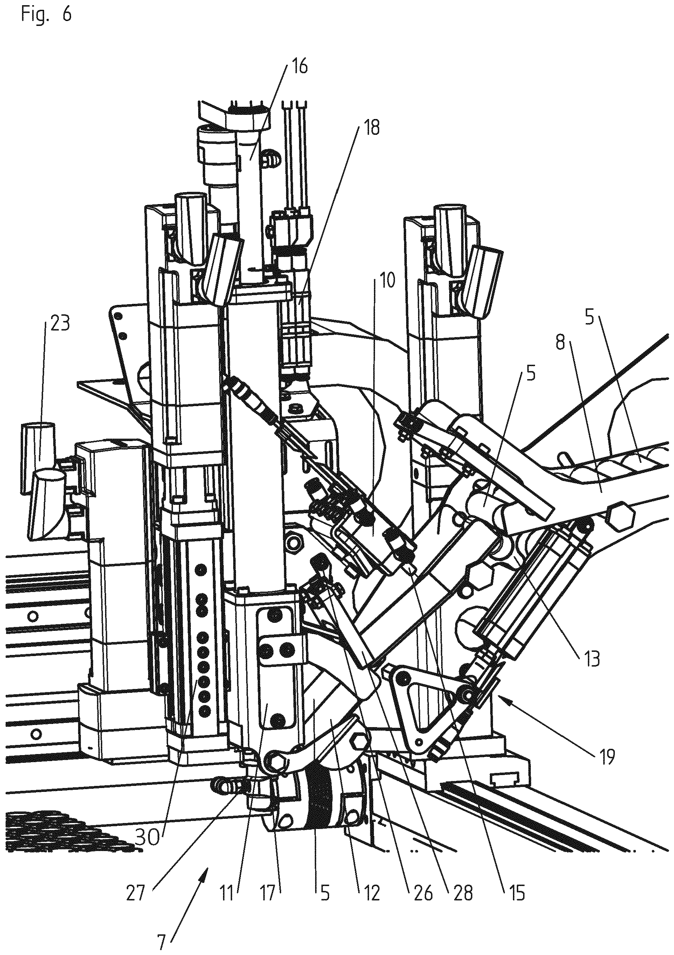

Fig. 6 zeigt in anderer Ansicht eine Einzelheit der Vorrichtung 1 zum Bestücken von Zellenträgern 4 mit Rundzellen 5.

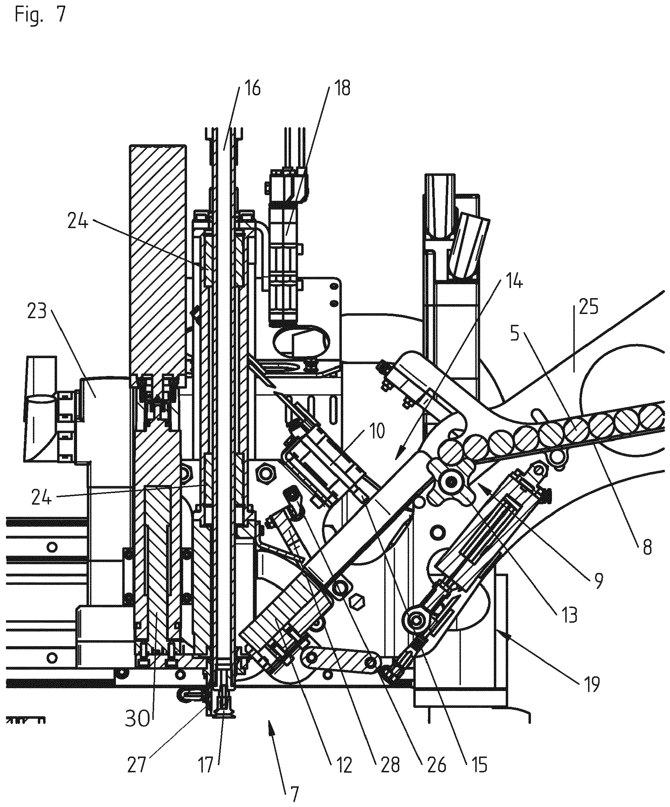

Fig. 7 zeigt im Schnitt die Vereinzelungsvorrichtung 9, die Einrichtung 10 zum Schwenken (Ausrichten) der Rundzellen 5 in die richtige Polarität, die Belademechanik mit Übergabeschale 12 und als Setzmechanik den Bestückungskopf 7 mit Beladekanal 11.

Das Magazin 8 für Lithium-Ionen-Rundzellen 5 der Vorrichtung 1 ist beispielsweise ein Flachmagazin oder ein Magazin mit mehreren Aufnahmen oder ein Magazin, in welchem Rundzellen einfach aufeinander liegen.

Die Bauart des Magazins, in dem Rundzellen 5 vorrätig gehalten werden, ist weitgehend beliebig, so dass das Magazin in verschiedenen Ausführungsformen ausgebildet sein kann. Die in Fig. 1 gezeigte Ausführungsform als (Flach-)Magazin 8 ist nicht zwingend. Beispielsweise kann das Magazin als FIFO-Magazin ("first in first out"-Magazin) oder als Magazin mit chaotischem System ausgebildet sein.

Abgabeseitig des Magazins 8 ist die Vereinzelungsvorrichtung 9 vorgesehen, die im gezeigten Ausführungsbeispiel als Drehstern 13 ausgebildet ist, wobei der Drehstern 13 beispielsweise eine Länge hat, die etwa der Länge von Rundzellen 5 entspricht. Mit Hilfe der Vereinzelungsvorrichtung 9 wird aus dem Magazin 8 jeweils eine Rundzelle 5 entnommen und zur Einrichtung 10, in welcher die Rundzellen 5 in die richtige Polarität ausgerichtet (geschwenkt) werden, bewegt.

Vor der Einrichtung 10 ist eine Anordnung 14 zum Feststellen der Polarität der Rundzellen 5 vorgesehen. Mit Hilfe der Anordnung 14 wird festgestellt, welche Lage der positive Pol und der negative Pol der soeben vereinzelten Rundzelle 5 haben. Der Einrichtung 10 nachgeschaltet kann ein, beispielsweise an einer Brücke 26 angeordneter, Sensor 28 vorgesehen sein, mit dessen Hilfe festgestellt wird, ob Rundzellen 5 in der nach der Einrichtung 10 vorgesehenen Belademechanik richtig angekommen sind.

Die Vereinzelungsvorrichtung 9 verhindert auch, dass aus dem Magazin 8 jeweils mehr als eine Rundzelle 5 entnommen wird.

Die Vereinzelung der Rundzellen 5 kann auch anders als mit einem Drehstern 13 ausgebildet sein. Wesentlich ist lediglich, dass aus dem Magazin 8 jeweils eine Rundzelle 5 entnommen, zunächst der Anordnung 14 zum Feststellen der Polarität und dann der nachgeschalteten Einrichtung 10 zum Schwenken (Drehen) von Rundzellen 5 in die richtige Ausrichtung (richtige Polarität) zugeführt wird.

Die Einrichtung 10 zum Schwenken von Rundzellen 5 in die richtige Ausrichtung ist im gezeigten Ausführungsbeispiel als Anordnung mit zwei vor- und zurückschiebbaren Stiften 15 ausgebildet. In der Grundstellung sind beide Stifte 15 der Einrichtung 10 vorgeschoben, so dass eine von der Vereinzelungsvorrichtung 9 kommende (heranrollende) Rundzelle 5 in Anlage an beide Stifte 5 gelangt. Je nachdem, welche Polarität vorgegeben ist, wird der eine oder der andere Stift 15 zurückgezogen, so dass die zunächst an beiden Stiften 15 anliegende Rundzelle 5 um eine zu ihrer Längserstreckung im Wesentlichen senkrechte Achse entweder in die eine oder in die andere Richtung schwenkt, um so eine im Wesentlichen lotrechte Ausrichtung mit der vorgegebenen Lage der Pole (= Polarität) der Rundzelle 5 einzunehmen.

Wenn der - bezogen auf die Richtung, in der eine Rundzelle zu der Einrichtung 10 rollt oder gleitet - rechte Stift 15 (in Fig. 3 der "hintere" Stift 15) in seiner Wirkstellung ist, schwenkt die Rundzelle 5 um etwa 90° im Uhrzeigersinn, wenn sie sich an dem Stift 15 vorbeibewegt. Sinngemäß erfolgt ein Schwenken im Gegenuhrzeigersinn, wenn der andere (in Fig. 3 "vordere" Stift 15) in seiner Wirkstellung ist. So wird erreicht, dass die Rundzelle 5 in der nachgeschalteten Übergabeschale 12 so ausgerichtet ist, dass sie die richtige Polarität aufweist, also mit dem gewünschten Pol nach vorne unten weisen.

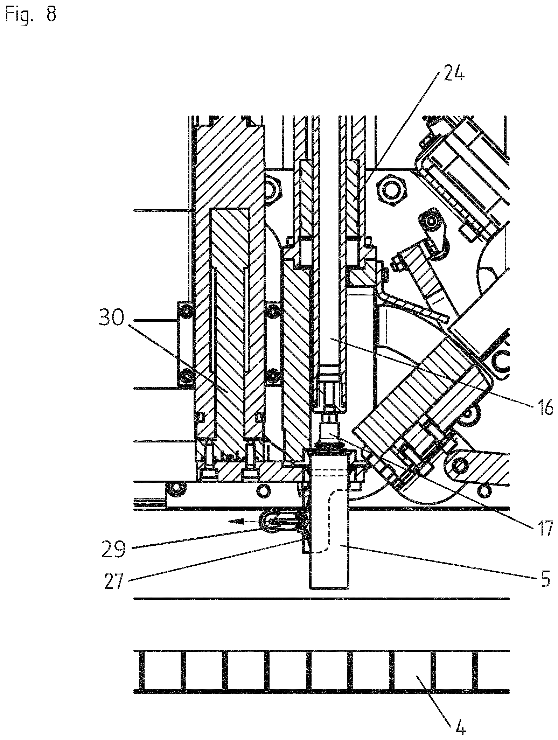

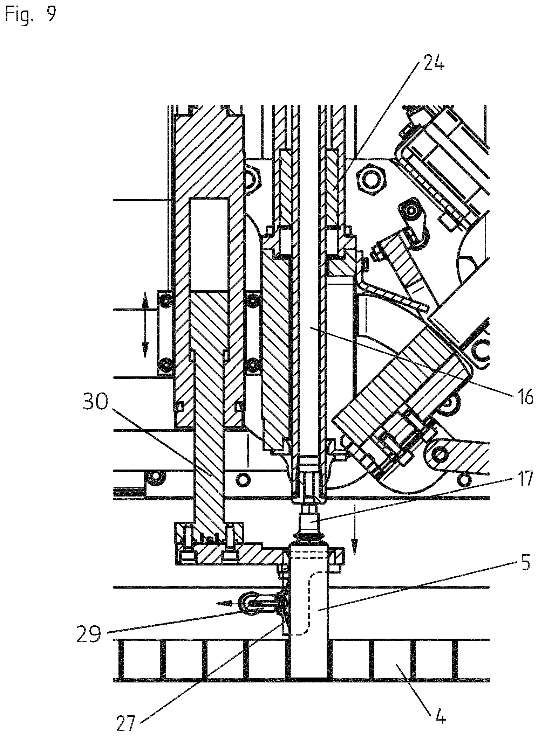

Die Belademechanik ist im gezeigten Ausführungsbeispiel als kippbare (schwenkbare), etwa wannenförmige Übergabeschale 12 ausgebildet, die mit Hilfe eines Antriebes 19 (Schwenkmechanik) aus der in den Fig. 3, 6 und 7 gezeigten Stellung (jeweils mit einer Rundzelle 5) in eine Stellung verschwenkt werden kann, in der die Rundzelle 5 im Wesentlichen lotrecht ausgerichtet und im Beladekanal 11 des Bestückungskopfes 7 aufgenommen ist. Unterhalb des unteren Endes des zur Übergabeschale 12 hin einseitig offenen Beladekanals 11 kann - bei Bedarf - eine einseitig, in Richtung der Übergabeschale 12 hin offene Führung 27 für Rundzellen 5 vorgesehen sein, um insbesondere komplexe Assemblierungen (Einsetzen von Rundzellen 5 in einen Zellenträger 4) zu unterstützen (Fig. 8). Die Führung 27 kann beispielsweise als längsgeteiltes Rohr ausgebildet sein, dessen offene Seite zur Übergabeschale 12 hinweist und dessen Innenfläche der Außenkontur einer Rundzelle entspricht. Beispielsweise ist die Führung 27 für Rundzellen 5 in ihrer Grundstellung an dem unteren Ende des Beladekanals 11 der verschwenkten Übergabeschale 12 gegenüberliegend angeordnet. Die Führung 27 für Rundzellen 5 ist vorteilhaft, da Rundzellen 5 während des mit Hilfe des Setzrohres 16 ausgeführten Setzvorganges stabilisiert werden. Dadurch entstehen auch bei hoher Packungsdichte in dem Zellenträger 4 und geringen Abständen zwischen Rundzellen 5 keine Probleme. Die Führung 27 für Rundzellen 5 kann mit Hilfe eines Antriebes 30 (ähnlich dem Antrieb 23 für das Setzrohr 16) bewegt werden. Dies erlaubt es, die Führung 27 mit den Bewegungen des Setzrohres 16 zu synchronisieren (identische Bewegungen und Bewegungsgeschwindigkeiten). Die Führung 27 für Rundzellen 5 kann über einen Anschluss 29 mit Unterdruck beaufschlagt werden, um Rundzellen 5 in der Führung 27 zu halten und genau zu führen. Wenn eine Rundzelle 5 vom Setzrohr 16 gehalten und von der Führung 27 gestützt den Zellenträger 4 erreicht hat, wird nur noch das Setzrohr 16 mit der Rundzelle 5 weiterbewegt, wobei die Rundzelle 5 an der Führung 27 entlanggleitet (Fig. 9). Sobald die Rundzelle 5 ihre Endstellung in dem Zellenträger 4 erreicht hat, wird sowohl der an den Saugkopf 17 als auch der an die Führung 27 angelegte Unterdruck aufgehoben. Anschließend werden das Setzrohr 16 und die Führung 27 wieder in ihre in den Fig. 7 und 8 gezeigte Grundstellung zurückbewegt und sind für die Aufnahme einer weiteren Rundzelle 5 bereit.

Zusätzlich kann die Führung 27 für Rundzellen 5 mit Sensoren ausgestattet sein, so dass die aktuelle Lage von Rundzellen 5 erfasst wird, um Kollisionen mit bereits eingesetzten Rundzellen 5 zu vermeiden.

Lotrecht ausgerichtete Rundzellen 5 befinden sich am unteren Ende des Beladekanals 11, in welchem - in im Wesentlichen lotrechte Richtung verstellbar - ein rohrförmiges Setzrohr 16 vorgesehen ist. Das Setzrohr 16 besitzt an seinem unteren Ende einen Saugkopf 17, der über das obere Ende des Setzrohres 16 von einer Unterdruckquelle 18 mit Unterdruck beaufschlagt werden kann. Dem Setzrohr 16 mit seinem Saugkopf 17 ist ein am Bestückungskopf 7 angeordneter Antrieb 23, der, bezogen auf die Richtung, mit welcher Rundzellen 5 von der Übergabeschale 12 zugeführt werden, dem Setzrohr 16 gegenüberliegt, zugeordnet. Der Antrieb 23 hat im gezeigten Ausführungsbeispiel einen als Pneumatikzylinder ausgebildeten Linearmotor, der mit dem Setzrohr 16 im Bereich des dem Saugkopf 17 gegenüberliegenden Endes des Setzrohres 16 gekuppelt ist (vgl. Fig. 7).

Das hohl ausgebildete Setzrohr 16 ist in dem Bestückungskopf 7 in Führungen 24 (vgl. Fig. 7) geführt und an seinem oberen Ende mit der Unterdruckquelle, die den Saugkopf 17 mit Unterdruck beaufschlagt, verbunden.

Sobald eine Rundzelle 5 im Beladekanal 11 angeordnet ist (diese Stellung erreicht sie durch Verschwenken der Übergabeschale 12), wird das obere Ende der Rundzelle von dem Saugkopf 17 an dem Setzrohr 16 angesaugt und die Übergabeschale 12 wieder in die Stellung von Fig. 3 zurückgeschwenkt. Bevor die Übergabeschale 12 wieder in ihre z.B. in Fig. 4 oder 5 gezeigte Stellung zurückgeschwenkt wird, wird das Setzrohr 16, an dessen Saugkopf 17 eine Rundzelle durch Unterdruck gehalten ist, ein kleines Stück weit angehoben, so dass verhindert ist, dass die Übergabeschale 12 an dem unteren Ende (dort ist einer der Pole der Rundzelle 5) entlang schleift. Im Anschluss daran wird das Setzrohr 16 mit aufrecht gehaltenem Unterdruck nach unten bewegt, um die Rundzelle 5 in den Zellenträger 4 (Carrier) einzusetzen. Dabei kann beispielsweise so gearbeitet werden, dass die Rundzelle 5 so lange durch Unterdruck an dem Saugkopf 17 des Setzrohres 16 festgehalten wird, bis die Rundzelle 5 gesichert die definierte Endstellung in dem Zellenträger 4 erreicht hat. Zum Absetzen einer Rundzelle 5 in den Zellenträger 4 wird der an den Saugkopf 17 angelegte Unterdruck aufgehoben und gegebenenfalls der Saufkopf 17 mit Druckluft beaufschlagt, um die von ihm gehaltene Rundzelle 5 sicher freizugeben. Sobald eine Rundzelle 5 abgesetzt worden ist, wird das Setzrohr 16 wieder nach oben in seine Ausgangsstellung zurückbewegt, so dass der Beladekanal 11 wieder frei zugänglich ist und von der Übergabeschale 12 eine weitere Rundzelle 5 in den Beladekanal 11 eingeführt werden kann.

Die richtige Position, mit welcher eine Rundzelle 5 in einen Aufnahmeraum in den Zellenträger 4 eingesetzt wird, wird durch Bewegen der Vorrichtung 1 durch Betätigen des portalkranartigen Trägers 2 und/oder des Balkens 3 (Fig. 1) erreicht.

Während eine Rundzelle 5 von dem Setzrohr 16 in den Zellenträger 4 eingesetzt wird, gleitet eine nächste Rundzelle 5 aus der Einrichtung 10 zum Schwenken von Rundzellen 5, mit der richtigen Polarität ausgerichtet, in die Übergabeschale 12. Sobald das Setzrohr 16 wieder in seiner Ausgangsstellung ist, wird die Belademechanik betätigt und die Übergabeschale 12 mit einer Rundzelle 5, beispielsweise durch Schwenken der Übergabeschale 12, in den Beladekanal 11 bewegt. Die Übergabeschale 12 bleibt solange in eingeschwenkter Stellung am unteren, einseitig offenen Beladekanal 11, in welchem sich das Setzrohr 16 auf und ab bewegt, bis eine Rundzelle 5 von dem Saugkopf 17 des Setzrohres 16 mit Hilfe von Unterdruck festgehalten ist.

Die Übergabeschale 12 ist im unteren Bereich des Bestückungskopfes 7 mit dem Kanal, in welchem das Setzrohr 16 auf und ab bewegbar ist, verschwenkbar angeordnet. Die Schwenkmechanik 19 für die Übergabeschale 12 umfasst im gezeigten Ausführungsbeispiel einen Linearmotor 20, z.B. einen pneumatischen Zylinder oder einen elektrischen Antrieb, einen um eine gestellfeste Achse verschwenkbaren, im Wesentlichen dreieckförmigen oder als runde Scheibe ausgebildeten Lenker 21 und eine Pleuelstange 22, die den Lenker 21 mit der Übergabeschale 12 kuppelt.

Im Bereich zwischen der Vereinzelungsvorrichtung 9, die im Beispiel als Drehstern 13 ausgebildet ist, ist die Anordnung 14 vorgesehen, mit der die Polarität von Rundzellen 5 festgestellt wird, wobei die Anordnung 14 auch gleichzeitig die ordentliche Funktion von Rundzellen 5 überprüfen kann. Die Anordnung 14 steuert die Einrichtung 10 zum Schwenken von Rundzellen 5 entsprechend der von der Anordnung 14 festgestellten Polarität der von der Vereinzelungsvorrichtung 9 kommenden Rundzellen 5 an, so dass der jeweils richtige Schwenkvorgang (im Uhrzeigersinn oder im Gegenuhrzeigersinn) ausgeführt wird. Beispielsweise wird von der Anordnung 14 das Zurückziehen des richtigen Stiftes 15 der Einrichtung 10 angesteuert.

Anstelle der Stifte 15 aufweisenden Einrichtung 10 zum Schwenken von Rundzellen 5 in die richtige Ausrichtung (es soll der positive oder der negative Pol der Rundzelle nach oben weisen) kann auch eine anders ausgebildete Einrichtung vorgesehen sein. Beispielsweise kann die Einrichtung zum Schwenken von Rundzellen 5 als Wanne (Rinne) ausgebildet sein, in welcher eine vereinzelte Rundzelle 5 eingelegt wird (oder hineingleitet). Die Wanne wird dann beispielsweise mit Hilfe eines elektrischen oder pneumatischen Antriebes entweder in die eine Richtung oder in die andere Richtung geschwenkt, um die Rundzelle 5 für das Weitergleiten in die Übergabeschale 12 so auszurichten, dass der gewünschte Pol nach oben weist, die Rundzelle 5 also mit der vorgegebenen ("richtigen") Polarität ausgerichtet dem Bestückungskopf 7 zugeführt wird. Wenn die Einrichtung 10 zum Schwenken von Rundzellen 5 als Wanne (oder als Rinne) ausgebildet ist, kann es vorteilhaft sein, die Wanne mit der Anordnung 14 zum Feststellen der Polarität der in der Wanne aufgenommenen Rundzelle 5 zu kombinieren.

Im gezeigten Ausführungsbeispiel ist für das Magazin 8 für Rundzellen 5 eine Aufnahme 25 vorgesehen, die an der Vorrichtung 1 in unterschiedlichen Winkelstellungen festgelegt werden kann.

Um zu verhindern, dass eine Rundzelle 5 mit der Übergabeschale 12 in elektrisch leitenden Kontakt tritt, während diese zur Übergabeschale 12 gleitet und von dieser an das untere Ende des Bestückungskopfes 7 bewegt wird, ist die Übergabeschale 12 oder wenigstens ihr innerer Teil, an welchem die Rundzelle 5 anliegt, aus elektrisch nicht leitendem Werkstoff (Isolierstoff) gefertigt.

Ein Vorteil der beschriebenen Ausführungsform des Bestückungskopfes 7 liegt u.a. darin, dass er es erlaubt, die Vorrichtung 1 zum Bestücken an unterschiedliche Formen und Größen von Rundzellen 5 anzupassen.

Zusammenfassend kann ein Ausführungsbeispiel der Erfindung wie folgt beschrieben werden:
Eine Vorrichtung 1 zum Bestücken von Trägern 4 mit Rundzellen, beispielsweise Lithium-Ionen-Rundzellen 5, besitzt ein Magazin 8 für Rundzellen 5, eine Vereinzelungsvorrichtung 9, eine Einrichtung 10 zum Schwenken von Rundzellen 5, eine Anordnung zum Einführen von Rundzellen 5 in einen Beladekanal 11 eines Bestückungskopfes 7 und ein Setzrohr 16 mit einer Anordnung zum Festhalten von Rundzellen 5. Mit der Vorrichtung 1 werden Rundzellen 5 aus dem Magazin 8 einzeln entnommen, dann verschwenkt, um sie mit der richtigen Polarität auszurichten, worauf die Rundzellen 5 mit der richtigen Polarität erfasst und in den Träger 4 für Rundzellen 5 abgesetzt werden.

## Patentansprüche

1. Verfahren zum Bestücken von Trägern (4) mit Rundzellen, beispielsweise Lithium-Ionen-Rundzellen (5), bei dem Rundzellen (5) aus einem Magazin (8) einzeln entnommen werden, wobei die Rundzellen (5) verschwenkt werden, um sie mit der richtigen Polarität auszurichten und wobei die Rundzellen (5) mit der richtigen Polarität erfasst und in den Träger (4) für Rundzellen (5) abgesetzt werden, **dadurch gekennzeichnet, dass** zum Entnehmen von Rundzellen (5) aus dem Magazin (8) eine Vereinzelungsvorrichtung (10) verwendet wird, dass die Vereinzelungsvorrichtung (10) mit einem Drehstern (13) arbeitet, und dass im Anschluss an die Vereinzelung von Rundzellen (5) eine Prüfung der Polarität und gegebenenfalls der Funktion der Rundzellen mit Hilfe einer Anordnung (14) ausgeführt wird.

2. Verfahren nach Anspruch 1, **dadurch gekennzeichnet, dass** Rundzellen (5) zum Ausrichten derselben mit der richtigen Polarität um eine zu ihrer Längserstreckung senkrecht stehende Achse geschwenkt werden.

3. Verfahren nach Anspruch 1 oder 2, **dadurch gekennzeichnet, dass** mit der richtigen Polarität ausgerichtete Rundzellen (5) unter Verschwenken aus einer Schräglage in eine im Wesentlichen lotrechte Stellung bewegt und dann in den Träger (4) für Rundzellen (5) eingesetzt werden.

4. Vorrichtung zum Ausführen des Verfahrens nach einem der Ansprüche 1 bis 3, mit einem Magazin (8), einer Vereinzelungsvorrichtung (9) und mit einer Einrichtung (10) zum Schwenken von Rundzellen (5), **dadurch gekennzeichnet, dass** eine Anordnung zum Einführen von Rundzellen (5) in einen Beladekanal (11) eines Bestückungskopfs (7) vorgesehen ist, dass ein Setzrohr (16) mit einer Anordnung zum Festhalten von Rundzellen (5) vorgesehen ist und dass als Vereinzelungsvorrichtung (9) ein Drehstern (13) vorgesehen ist.

5. Vorrichtung nach Anspruch 4, **dadurch gekennzeichnet, dass** die Einrichtung (10) zum Schwenken von Rundzellen (5) eine schwenkbare Wanne umfasst.

6. Vorrichtung nach Anspruch 4, **dadurch gekennzeichnet, dass** die Einrichtung (10) zum Schwenken von Rundzellen (5) zwei Stifte (15), die voneinander unabhängig in eine Wirkstellung vorschiebbar und zurückschiebbar sind, umfasst, und dass der eine oder andere der Stifte (15) in seiner Wirkstellung an einer Rundzelle (5) außermittig angreift.

7. Vorrichtung nach einem der Ansprüche 4 bis 6, **dadurch gekennzeichnet, dass** die Anordnung zum Einführen von Rundzellen (5) in den Beladekanal (11) eine schwenkbar gelagerte Übergabeschale (12) für die Aufnahme je einer Rundzelle (5) aufweist.

8. Vorrichtung nach einem der Ansprüche 4 bis 7, **dadurch gekennzeichnet, dass** dem Beladekanal (11) eine Führung (27) für Rundzellen (5) zugeordnet ist, und dass die Führung (27) gemeinsam mit dem Setzrohr (16) verstellbar ist.

9. Vorrichtung nach Anspruch 8, **dadurch gekennzeichnet, dass** die Führung (27) für Rundzellen (5) zum Beaufschlagen mit Unterdruck mit einer Quelle für Unterdruck verbunden ist.

10. Vorrichtung nach einem der Ansprüche 4 bis 9, **dadurch gekennzeichnet, dass** das Setzrohr (16) einen mit Unterdruck beaufschlagbaren Saugkopf (17) zum Festhalten einer Rundzelle (5) aufweist.

11. Vorrichtung nach einem der Ansprüche 4 bis 10, **dadurch gekennzeichnet, dass** eine Anordnung (14) zum Prüfen der Polarität zwischen der Vereinzelungsvorrichtung (9) und der Einrichtung (10) zum Schwenken von Rundzellen (5) vorgesehen ist.

12. Vorrichtung nach Anspruch 11, **dadurch gekennzeichnet, dass** die Anordnung (14) zum Prüfen der Polarität auch zum Prüfen der Funktion von Rundzellen (5) ausgebildet ist.

13. Vorrichtung nach einem der Ansprüche 4 bis 12, **dadurch gekennzeichnet, dass** dem Setzrohr (16) ein Antrieb (23) zum Verschieben des Setzrohres (16) in dessen Längsrichtung vorgesehen ist, wobei das Setzrohr (16) aus einer Bereitschaftsstellung mit in dem Beladekanal (11) angeordnetem Saugkopf (17) in eine dem Träger (4) für Rundzellen (5) angenäherte Wirkstellung verstellbar ist.

14. Vorrichtung nach Anspruch 12 oder 13, **dadurch gekennzeichnet, dass** an dem dem Saugkopf (17) gegenüberliegenden Ende des Setzrohres (16) eine zu einer Unterdruckquelle (18) führende Leitung angeschlossen ist.
